(19) Europäisches Patentamt
European Patent Office
Office européen des brevets

(11) Publication number: 0 111 343 B1

(12) # EUROPEAN PATENT SPECIFICATION

(45) Date of publication of patent specification: 28.01.87

(51) Int. Cl.[4]: C 08 F 214/26 // (C08F214/26, 234:02)

(21) Application number: 83112526.5

(22) Date of filing: 13.12.83

(54) **Modified granular polytetrafluoroethylene.**

(30) Priority: 13.12.82 US 449500

(43) Date of publication of application: 20.06.84 Bulletin 84/25

(45) Publication of the grant of the patent: 28.01.87 Bulletin 87/05

(84) Designated Contracting States: DE FR GB IT NL

(56) References cited:
EP-A-0 073 087
EP-A-0 080 187
DE-A-1 745 252
US-A-3 978 030

(73) Proprietor: E.I. DU PONT DE NEMOURS AND COMPANY
1007 Market Street
Wilmington Delaware 19898 (US)

(72) Inventor: Malhotra, Satish Chandra
210 N. Hills Drive
Parkersburg, WV 16101 (US)

(74) Representative: Abitz, Walter, Dr.-Ing. et al
Abitz, Morf, Gritschneder, Freiherr von Wittgenstein Postfach 86 01 09
D-8000 München 86 (DE)

EP 0 111 343 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Field of the Invention

This invention relates to improved granular polytetrafluoroethylene compositions which contain a small amount of at least one selected dioxole copolymerized therewith, and to processes for preparing such compositions.

Background of the Invention

Granular polytetrafluoroethylene molding resins are employed in molding and ram extrusion processes to produce plastic articles. Granular polytetrafluoroethylene is prepared by polymerizing tetrafluoroethylene by a process in which little or no dispersing agent is employed and agitation is carried out vigorously in order to produce a precipitated resin. This resin is commonly referred to as "granular" resin. The procedure is called "suspension polymerization". When the term "granular" is used herein, it is used to denote the resin formed by the suspension polymerization procedure.

There is another polytetrafluoroethylene material that is referred to by those skilled in art as "fine powder" polytetrafluoroethylene. To make this so-called "fine powder", a process called "aqueous dispersion polymerization" is used. In this process sufficient dispersing agent is employed and agitation is mild in order to produce small colloidal size particles dispersed in the aqueous reaction medium. In this aqueous dispersion polymerization, precipitation (i.e., coagulation) of the resin particles is avoided during polymerization. The dispersion may be used as such, or the dispersed particles may be coagulated in a separate step and the resulting "fine powder" obtained.

The two polymerization procedures produce distinctly different products. The granular product can be molded in various forms, whereas the fine powder produced by the aqueous dispersion method cannot be molded but must be fabricated by dispersion coating or by adding a lubricant for paste extrusion. In contrast, granular resin is incapable of being paste extruded.

Tetrafluoroethylene polymers produced by the aqueous dispersion polymerization method are generally not suited to molding and ram extrusion processing, since they have a very soft sensitive grain, and, due to their molecular weight being lower compared with granular polymers, give extrudates with low mechanical strength.

Suspension polymerization of tetrafluoroethylene to obtain granular product is generally carried out by filling the polymerization reactor, which is equipped with an agitating system, with an aqueous medium in which a catalyst forming free radicals, optionally a buffer, and optionally a small amount of a fluorinated emulsifier. The air is removed and tetrafluoroethylene is fed into the reactor. After polymerization has started, gaseous tetrafluoroethylene is fed at a rate corresponding to the polymer amount being formed, while keeping the polymerization pressure constant.

It has previously been known that if a small amount of comonomer is present, the properties of the resulting modified granular polytetrafluoroethylene particles can be altered. For example, sinterability can be improved and crystallinity reduced. A comonomer preferred by the art is perfluoro(propyl vinyl ether), $CF_3CF_2CF_2—O—CF = CF_2$. However, using perfluoro(propyl vinyl ether), the surfaces of articles molded from the resulting copolymer tend to be rough.

EP—A1—73,087 discloses amorphous copolymers of perfluoro-2,2-dimethyl-1,3-dioxole with tetrafluoroethylene. The amount of tetrafluoroethylene may be as high as 99% by weight.

EP—A2—80,187 discloses both amorphous and crystalline copolymers of perfluoro-1,3-dioxole with tetrafluoroethylene and the amount of the dioxole compound may be as low as 1 mole percent.

U.S. Patent 3,978,030 describes certain polymers of fluorinated dioxole compounds. The reference teaches that the dioxole monomers may be copolymerized with standard techniques, and that conventional monomers such as those described in U.S. Patent 2,468,664 may be employed. A crystalline copolymer of perfluoro-2,2-dimethyl-1,3-dioxole with tetrafluoroethylene is described in Example 3 of the first mentioned U.S. patent. However the surface smoothness of articles made from this polymer is not satisfactory. Therefore it would be desirable to find a tetrafluoroethylene copolymer which can be used to make granular copolymer articles having smoother surfaces.

Summary of the Invention

This invention is a granular modified polytetrafluoroethylene composition comprising tetrafluoroethylene polymer containing polymerized units of at least one copolymerizable monomer of the formula

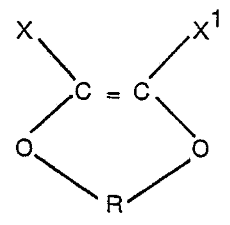

present in an amount which is less than 0.5% by weight, based on weight of polymer, and which does not cause the melt viscosity of the resulting polymer to be less than about 1 × $10^8$ Pa·s at 380°C., wherein R is selected from

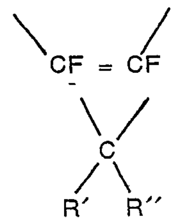 , or

wherein

R′ and R″ are each

F, Cl, 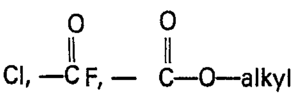

or perfluoroalkyl wherein the alkyl groups contain 1—6 carbon atoms, and X and $X^1$ are each F, Cl or H.

Description

The polymers of this invention are of high molecular weight as indicated by their inability to be fabricated by melt flow procedures such as melt extrusion or injection molding. Thus they are "non-melt-fabricable", i.e. are not extrudable from a melt. They are made by the suspension tetrafluoroethylene polymerization process and thus are the so-called "granular" tetrafluoroethylene polymers. In view of their non-melt-fabricable nature, the copolymers have melt viscosities above 1 × $10^8$ Pa·s measured at 380°C. These high melt viscosities are obtained by keeping the amount of comonomer low. The amount of polymerized comonomer units present complementally to the tetrafluoroethylene units will be less than 0.5 percent by weight of total polymer weight. As a minimum amount present, preferably at least 0.01% of the comonomer will be present in copolymerized form. The comonomers have the formula

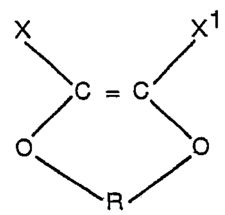

Preferably X and $X^1$ are both fluorine, and R is

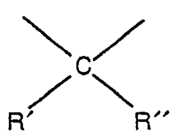 .

Preferably also, R′ and R″ are each fluorine or perfluoroalkyl wherein the alkyl groups contain between 1—6 carbon atoms. Most preferably R′ and R″ are each perfluoroalkyl.

Representative comonomers include perfluoro(2,2-dimethyl-1,3-dioxole), perfluoro dioxole and

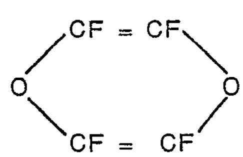

The process used to prepare the polymers of this invention is the usual suspension polymerization process used to prepare granular polytetrafluoroethylene. Such polymerization is described in a number of patents such as U.S. Patent 3,245,972 and U.S.P. 3,855,191. In brief, tetrafluoroethylene is pressured into an autoclave containing water and conventional free-radical polymerization initiators along with optionally buffer and optionally a small amount (up to about 200 ppm based on $H_2O$) of an emulsifying agent if desired (to increase surface area). The reaction mixture is agitated and the polymerization is carried out at suitable temperatures and pressures. Upon completion of the polymerization, the polymer is isolated and dried. The comonomers may be added as a precharge, but since the comonomers react much faster than

tetrafluoroethylene monomer, it may be preferred to add comonomer throughout the course of the polymerization in order to obtain a polymer that contains comonomer units distributed relatively evenly throughout the polymer chain in the small amounts present. Thus, comonomer is preferably both precharged to the polymerization vessel and added subsequently during polymerization, either in increments or continuously.

The polymerization temperature will ordinarily be between 50—120°C and the initiator will be a peroxide or persulfate. Inorganic persulfates, such as ammonium persulfate, are preferred. A buffer to maintain pH at between 6—9 may be used if desired. In addition, a small amount of a dispersing agent (e.g. up to 100 or 200 ppm based on water present) may be employed in order to increase the surface area of the resulting polymer particles. Agitation will be sufficient to ensure precipitation of the polymer particles as the polymerization proceeds.

Due to presence of the comonomer, the polymers of this invention, as compared to polytetrafluoroethylene homopolymer and with polymers modified with perfluoro (propylvinyl ether), have low crystallinity, and a high degree of surface smoothness in molded parts. Thus they are useful in making molded parts where smooth surfaces are important, such as ball valve seats. Furthermore, due to the low crystallinity the polymers are expected to have high flex life and low flex modulus in molded parts.

A distinction must be made between the granular (suspension made) polymers of this invention and tetrafluoroethylene copolymers having a higher content of comonomer. The latter contain enough comonomer to permit them to be processed from a melt by extrusion methods customary for thermoplastics. The granular suspension-made polymers of this invention, like unmodified polytetrafluoroethylene itself, belong to the type of tetrafluoroethylene polymers that are not extrudable from the melt, and special molding methods must be used to fabricate them.

Furthermore, being suspension-made, the polymers of this invention have a morphology which differs from that of dispersion-prepared fine powder polymers. These latter polymers are produced in the presence of such high amounts of emulsifier that, after polymerization had ended, they remain in colloidal distribution in the aqueous medium. These fine powder polymers are obtained from the colloidal dispersion by coagulation and on coagulation form agglomerates of colloidal primary particles that have an average particle diameter of about 0.1 to 0.5 µm. As is known to one skilled in the art, they can not be molded by ram extrusion or mold-sinter processing techniques, even if they contain comonomer modifiers.

Properties of the polymers obtained in the Examples which follow are obtained according to the procedures set forth below:

1) Determination of comonomer content

Comonomer content in the copolymers was determined by Fourier Transform (FT) IR spectroscopy and $F^{19}$ NMR analysis. Ten mil cold pressed films were prepared and spectra were obtained on Nicolet 7000 FT IR spectrophotometer at a resolution of 4 $cm^{-1}$. The IR band at 10.1—10.2 microns is due to C—O—C stretching of the dioxole unit and therefore the absorbance is related to the dioxole content. The IR is calibrated against NMR analysis.

2) Standard Specific Gravity (SSG)

Standard specific gravity (SSG) of the molding powder is measured by water displacement of a standard molded test specimen in accordance with ASTM D1457—69. The standard molded part is formed by preforming 12.0 g. of the molding powder in a 2.86 cm. diameter die at a pressure of 345 bar, followed by the sintering cycle of the preform of heating from 300° to 380°C. at 2°C/min., holding at 380°C. for 30 minutes, cooling to 295°C. at 1°C./min. and holding at this temperature for 25 minutes, after which the specimen is cooled to room temperature and tested for specific gravity.

3) Specific Surface Area (SSA)

SSA was measured by a "Quantosorb" surface air analyzer. The measurement was made on raw polymer obtained directly from the reaction vessel after washing and drying.

4) Melt Viscosity

Melt viscosity is calculated by measuring the tensile creep of a sintered piece held at 380°C. Specifically, 12 g. of molding powder is placed in a 7.6 cm. diameter mold between 0.152 cm. rubber cauls and paper spacers. Pressure is then slowly applied on the mold until a value of 39.7 bar is obtained. This pressure is held for 5 minutes and then released slowly. After the sample disc is removed from the mold and separated from the cauls and paper spacers, it is sintered at 380°C. for 30 minutes. The oven is then cooled to 290°C. at a rate of about 1°C. a minute and the sample is removed. A crack-free rectangular sliver with the following dimensions is cut: 0.152 to 0.165 cm. wide, 0.152 to 0.165 cm. thick, and at least 6 cm. long. The dimensions are measured accurately and the cross-sectional area is calculated. The sample sliver is attached at each end to quartz rods by wrapping with silver-coated copper wire. The distance between wrappings is 4.0 cm. This quartz rod-sample assembly is placed in a columnar oven where the 4 cm. test length is brought to a temperature of 380° ± 2°C. A weight is then attached to the bottom-quartz rod to give a total weight suspended from the sample sliver of about 17 g. The elongation measurements vs. time are

obtained, and the best average value for the creep curve in the interval between 100 and 130 minutes is measured. The apparent melt viscosity is then calculated from the relationship.

$\eta app = (WL_t g)/3(dL_t/dt)A_T$ wherein

$\eta app$ = (apparent) melt viscosity in shear, poises

W = tensile load on sample, g

$L_t$ = length of sample (at 380°C.) cms. (4.32 cm)

g = gravitational constant, 980 cm./sec.$^2$

$(dL_t/dt)$ = rate of elongation of sample under load = slope of elongation vs. time plot, cm./sec.

$A_T$ = cross-sectional area of sample (at 380°C.), cm$^2$ — area increases 37% at 380°C over that at room temperature.

5) Mold Shrinkage

Mold shrinkage (MS) was determined by measuring the diameter of the SSG molding before and after sintering:

$$\% \text{ MS} = \frac{\text{Initial Dia.} - \text{Final Dia.}}{\text{Initial Dia.}} \times 100$$

6) Heat of Crystallization

Heat of crystallization was determined by a Differential Scanning Calorimeter (DSC). This value is normally indicative of molecular weight for a given comonomer and comonomer content.

7) Anisotropic Constant

Anisotropic constant(s) is calculated as below:

$$(S) = \frac{100\ (1 + 0.01\ [\%\ \text{shrinkage}])}{\sqrt[3]{\dfrac{\text{Preform density}}{\text{Sintered density}}} \times (0.9667 + 0.1025\ \text{preform porosity} - 0.0844 \times \text{preform Por.}^2}$$

It measures polymer "elastic recovery" during sintering, a major cause of surface roughness.

8) Mold Surface Smoothness

Surface smoothness of sintered molding made out of the polymer is determined by means of a Bekk tester. Smoothness is expressed as the time required for passing 10 cm$^3$ of air, by an underpressure of 0.5 bar, between the mold surface and an annular, polished surface of a glass disc with 10 cm$^2$ area, held together at a pressure of 1 bar. The longer the time the smoother the surface.

## Example 1

A 38-liter polykettle vessel was charged with 21.8 kg. of demineralized water, 0.10 g. ammonium perfluorooctanoate (APFC) dispersant, and 0.30 g ammonium persulfate (APS). The contents of the vessel were heated to 65°C and evacuated. The vessel was agitated with a 2-blade 45° pitch agitator at 600 RPM. Six ml perfluoro(2,2-dimethyl-1,3-dioxōle), PDD hereafter, was injected into the vessel with a syringe. Tetrafluoroethylene (TFE) was then added to the vessel until the pressure was $1.72 \times 10^6$ Pa. After the polymerization began, as evidenced by a drop in pressure, TFE was added to maintain the pressure at $1.72 \times 10^6$ Pa. After the desired amount of TFE had been added, the feed was stopped and the mixture was allowed to react down to $5.5 \times 10^4$ Pa pressure. Reaction time was 90 min. 8.2 kg TFE was polymerized. After venting and evacuation, the pressure in the vessel was brought back to atmospheric with nitrogen and the contents cooled to below 50°C. The polymer was discharged from the vessel and the adhesions were separated. The polymer was cut to less than 0.03 mm average particle size.

The polymer properties are given in Table 1.

## Example 2

Example 1 was repeated with the following ingredient amounts. The polymer properties are given in Table 1.

| | Ex. 2 |
|---|---|
| APFC, g | 0.10 |
| Zinc chloride, g | 0.50 |
| APS, g | 0.30 |
| PDD Precharge, ml | 3 |
| TFE Reacted, kg. | 8.2 |
| Reaction Time, min. | 95 |

## Comparison

In this experiment, perfluoro(propyl vinyl ether), PPVE, was used in place of the dioxole, PDD. Otherwise the same ingredients were used as were used in Ex. 2, except the reaction time was 132 min. Polymer properties are given in Table 1.

TABLE 1

Physical Properties of Polymers

| | Ex. 1 | Ex. 2 | Comparison |
|---|---|---|---|
| % PDD by Wt. | 0.06—0.07 | 0.02 | 0.014 (PPVE) |
| SSG at 34.48 M Pa | 2.143 | 2.144 | 2.155 |
| SSG at 6.90 M Pa | 2.119 | 2.095 | 2.143 |
| SSA, $M^2/g$ (Raw Polymer) | 2.0 | 2.0 | 3.6 |
| Melting Point, °C | 347 | 347 | 347 |
| Melt Viscosity, Pa·s | $4.4 \times 10^9$ | $6.7 \times 10^9$ | $2.2 \times 10^9$ |
| Mold Shrinkage, % at 34.48 M Pa | 2.7 | 2.9 | 4.3 |
| Heat of Crystallization, J/g | 18.4 | 18.4 | 22.6 |
| Anisotropic Constant, (s) | −0.23 | −0.58 | −1.60 |
| Surface Smoothness, ec. (1) (Bekk Test) | 470 | Not measured | 194 |

(1) Surface smoothness was measured on sintered discs made out of *agglomerated* polymer. The polymer after initial cutting of the raw polymer had a $d_{50}$ of 13 microns for both samples. It was agglomerated by agitation in an aqueous medium. Dried agglomerated resin had an apparent density of 704 g/l for both samples. This was sieved and the fraction between 355 and 500 μm was used for the test to eliminate the effect of agglomerate size on the surface smoothness. Two gram sample was preformed into a 2.54 cm. diameter disc and the disc sintered according to the procedure used for SSG measurement.

**Claims**

1. A non-melt-fabricable granular modified polytetrafluoroethylene composition comprising tetrafluoroethylene polymer containing polymerized units of at least one copolymerizable monomer of the formula

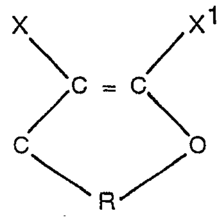

present in an amount is less than 0.5% by weight, based on weight of polymer, and which does not cause the melt viscosity of the resulting polymer to be less than about $1 \times 10^8$ Pa.s at 380°C., wherein R is selected from

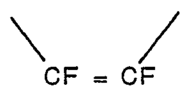
, or

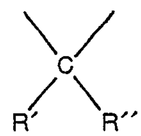

wherein
R′ and R″ are each

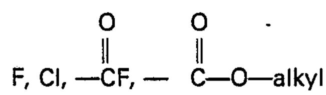

or perfluoroalkyl wherein the alkyl groups contain 1—6 carbon atoms, and X and $X^1$ are each F, Cl or H.

2. The composition of Claim 1 wherein X and $X^1$ in the copolymerizable monomer are both fluorine.

3. The composition of Claim 1 wherein the copolymerizable monomer is one in which X and $X^1$ are both fluorine and R is

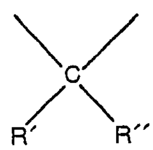

4. The composition of Claim 1, 2 or 3 in the form of a molding resin or in the form of a molded or extruded article.

5. Process for shaping a resin in which the resin is made of a composition defined in Claim 1, which comprises molding and shaping said resin into a shaped article, and cooling the shaped article.

**Patentansprüche**

1. Modifizierte nicht-schmelzverarbeitbare körnige Polytetrafluorethylen-Zusammensetzung, umfassend Tetrafluorethylenpolymeres, enthaltend polymerisierte Einheiten von wenigstens einem copolymerisierbaren Monomeren der Formel

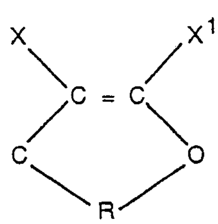

das in einer Menge von weniger als 0,5 Gew.-%, bezogen auf das Gewicht des polymeren, anwesend ist, und das nicht zu einer Schmelzviskosität des resultierenden Polymeren führt, die weniger als etwa 1 × $10^8$ Pa·s bei 380°C beträgt, wobei R ausgewählt ist aus

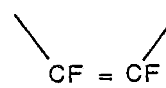 oder

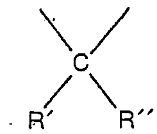

wobei R′ und R″ jeweils

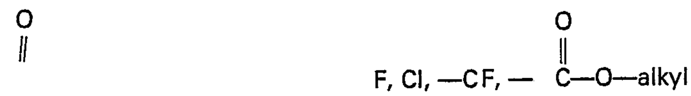

oder Perfluoralkyl bedeuten, wobei die Alkylgruppen 1—6 Kohlenstoffatome enthalten und X und $X^1$ jeweils F, Cl oder H bedeuten.

2. Zusammensetzung nach Anspruch 1, worin X und $X^1$ in dem copolymerisierbaren Monomeren beide Fluor bedeuten.

3. Zusammensetzung nach Anspruch 1, worin das copolymerisierbare Monomere ein solches ist, bei dem X und $X^1$ beide Fluor und R

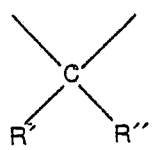

bedeuten.

4. Zusammensetzung nach den Ansprüchen 1, 2 oder 3 in Form eines Gießharzes oder in Form eines gegossenen oder extrudierten Gegenstandes.

5. Verfahren zur Formgebung eines Harzes, bei dem das Harz aus einer Zusammensetzung besteht, wie sie in Patentanspruch 1 definiert ist, welches das Gießen und Formgeben des Harzes zu einem geformten Gegenstand und das Abkühlen des geformten Gegenstandes umfaßt.

**Revendications**

1. Une composition granulaire modifiée de polytétrafluoroéthylène non transformable à l'état fondu, comprenant du polymère de tétrafluoroéthylène contenant des unités polymérisées d'au moins un monomère copolymérisable de la formule:

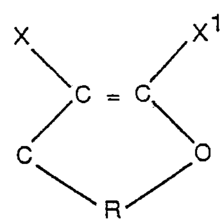

présentes en une quantité qui est inférieure à 0,5% en poids, sur la base du poids de polymère, et qui n'amène pas la viscosité à l'état fondu du polymère obtenu à être inférieure à environ 1 × $10^8$ Pa·s à 380°C, formule dans laquelle R est choisi entre:

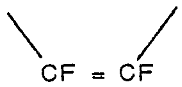 et

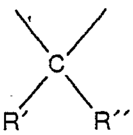

où R′ et R″ sont chacun

F, Cl, $-\overset{O}{\overset{\|}{C}}F$, un groupe $-\overset{O}{\overset{\|}{C}}-O-$alkyle

ou un groupe perfluoroalkyle, dans lesquels les groupes alkyles contiennent 1 à 6 atomes de carbone, et X et $X^1$ sont chacun F, Cl ou H.

2. La composition de la revendication 1, dans laquelle X et $X^1$, dans le monomère copolymérisable, sont tous deux le fluor.

3. La composition de la revendication 1, dans laquelle le monomère copolymérisable en est un dans lequel X et $X^1$ sont tous deux le fluor et R est

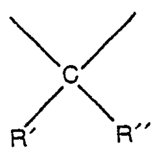

4. La composition de la revendication 1, 2 ou 3, sous la forme d'une résine à mouler ou sous la forme d'un article moulé ou extrudé.

5. Procédé de formage d'une résine, dans lequel la résine est faite d'une composition définie à la revendication 1, qui consiste à mouler et à former cette résine en un article de forme, et à refroidir l'article de forme.